# EUROPEAN PATENT APPLICATION

(11) **EP 2 439 152 A1**
(43) Date of publication of application: **11.04.2012**
(21) Application number: 10783236.2
(22) Date of filing: 12.05.2010
(51) Int. Cl.: B65D 88/12, H05B 3/00, H05B 3/20

(54) **HEATER JACKET AND CONTAINER DEVICE PROVIDED WITH SAME**

(30) Priority: 04.06.2009 JP 2009135249
(71) Applicant: Fuji Electric Retail Systems Co. Ltd., Tokyo 141-0032 (JP)
(72) Inventor: HASHIMOTO, Masami, Tokyo 141-0032 (JP)
(74) Representative: Appelt, Christian W.
(86) International application number: PCT/JP2010/058067
(87) International publication number: WO 2010/140452

(57) **Abstract**

To provide a lightweight and easily attachable/detachable heater jacket improving heating efficiency and saving energy and a container device including the same. Provided is a heater jacket (10) that is attachable to and detachable from an inner surface of a container (12) and has a heating and warming function for heating and keeping a conveying subject inside the container (12) warm, the heater jacket including: a lightweight and flexible heat insulating mat (18a) that includes at least one planar portion (16) with a heater (14) of which a temperature is controlled and which is embedded therein and formed by connecting the respective planar portions (16) in a bendable manner.

## Description

### TECHNICAL FIELD

The present invention relates to a heater jacket that heats and keeps a highly viscous product such as chocolate or oil warm and a container device that includes the same, and particularly, to a heater jacket that charges a highly viscous product into a bag in box (BIB) contained inside an about 1-ton container and conveys the highly viscous product by a vehicle, a ship, an airplane, or the like and a container device that includes the same.

### BACKGROUND ART

From the past, there is a known jacket such as a heat-keeping cover or a heat insulating mat used in a container for conveying chocolate, oil, or the like (for example, see Patent Literatures 1 and 2). The heat-keeping cover disclosed in Patent Literature 1 is formed in a sheet shape so as to cover the top surface and the side surface of a container, and it includes a notched opening and closing portion at the side portion thereof and a heat-keeping unit at the inner surface so as to keep the content of the container at a predetermined temperature. Further, the heat insulating mat disclosed in Patent Literature 2 is attached to the inner surface of a foldable container body so as to cool a refrigerated substance loaded inside the container in a heat insulating manner.

On the other hand, there is a known 1-ton assembly conveying container (for example, see Patent Literatures 3 to 5 and Non-Patent Literature 1). The container disclosed in Patent Literatures 3 and 4 is an assembly container that is formed of a thermoplastic material. Further, as shown in FIGS. 28 and 29, the container disclosed in Non-Patent Literature 1 includes a base member 1, foldable side walls 2, an inner bag 3, a detachable cover 4, and a donor 5 which you are able to open and chose. The side walls 2 are connected to the base member 1 through a hinge 6 and are able to move, and the adjacent side walls 2 are mechanically locked to each other. The base member 1 is provided with a discharge pipe 7 that communicates with the inside of the inner bag 3. Further, the container disclosed in Patent Literature 5 includes a heat insulating bottom plate, a bag, which is disposed on the bottom plate so as to be integrated with the bottom plate, is formed of a movable material, and has a rectangular parallelepiped shape having an open upper face, and a heat insulating side plate and a heat insulating cover plate that cover the entire side surfaces and the top surface from the outside thereof at the time of assembly.

On the other hand, there is a known foamed container in which a plate-shaped heater is disposed between an inner bottom surface of a container body and an inner bag (for example, see Patent Literature 6).

Regarding the conveying container, the present applicant has already provided a heating sheet and a raw food material storage device using the heating sheet disclosed in Patent Literature 8 and a heating panel disclosed in Patent Literature 7. As shown in FIG. 30, the heating panel of Patent Literature 7 has a configuration in which an aluminum heat transfer plate 9 is attached to the inside of a casing 8 obtained by butt-connecting upper and lower covers formed of heat-resistant plastic to each other. A silicon cord heater 11 with a safety fuse is attached to the other surface of the aluminum heat transfer plate 9, and the heating panel includes a power supply cord 13 that is connected to the heater 11. A foamed urethane material is charged inside the casing 8 in an integrated form. So to speak, the function of a heat insulating panel with an electric heater is exhibited.

### CITATION LIST

### PATENT LITERATURE

Patent Literature 1: Japanese Patent Application Laid-Open (JP-A) No. 2006-56571
Patent Literature 2: Japanese Patent No. 2627627
Patent Literature 3: Japanese Patent No. 3930856
Patent Literature 4: Japanese Patent No. 4079882
Patent Literature 5: Japanese Patent No. 3328537
Patent Literature 6: Japanese Patent Application Laid-Open (JP-A) No. 6-135488
Patent Literature 7: Japanese Utility Model Registration No. 3149305
Patent Literature 8: Japanese Patent Application Laid-Open (JP-A) No. 2009-283415

### NON-PATENT LITERATURE

Non-Patent Literature 1: Cornes Dodwell Ltd., "liquid foldable container combolife", [online], [search for May 20, H21], internet <URL:
http://www.cornes-dodwell.co.jp/products/packaging/containe r/products_combolife>

### DISCLOSURE OF THE INVENTION

### PROBLEMS TO BE SOLVED BY THE INVENTION

However, since the heat-keeping cover of Patent Literature 1 warms or heats the raw material in the bag in box (BIB) inside the container from the outside of the container, the heat-keeping and warm-up efficiency is very poor, and the heat-keeping cover is not suitable when a raw material such as chocolate or oil (fat such as lard which is a solid in a normal temperature) solidified at a normal temperature is desired to be promptly melted. Further, in the case where the heat-keeping unit of the heat-keeping cover is formed as an electric heater, there is a demand for developing an energy-saving technique that ensures predetermined heating efficiency while suppressing power consumption thereof. Furthermore, there is a demand for developing a technique of decreasing the weight of the container so that the heat-keeping unit is easily attached to and detached from the container and conveying load is suppressed.

The invention is made in view of such circumstances, and it is an object of the invention to provide a lightweight and easily attachable/detachable heater jacket improving heating efficiency and saving energy and a container device including the same.

### MEANS FOR SOLVING THE PROBLEMS

In order to solve the problem and attain the object, according to a heater jacket of claim 1 of the invention, the heater jacket is provided which is attachable to and detachable from an inner surface of a container and has a heating and warming function for heating and keeping a conveying subject inside the container warm, the heater jacket including: a lightweight and flexible heat insulating mat that is formed by connecting at least one planar portion to each other in a bendable manner, the planar portion having a temperature-controllable heater embedded therein.

Further, the heater jacket according to claim 2 of the invention provides the heater jacket according to claim 1, wherein the heat insulating mat includes a plastic member and is rigid to the extent that it has an ability to stand by itself.

Further, the heater jacket according to claim 3 of the invention provides the heater jacket according to claim 1 or 2, wherein the heater includes a temperature control unit and a circuit-breaking unit.

Further, the heater jacket according to claim 4 of the invention provides the heater jacket according to any one of claims 1 to 3, wherein the heat insulating mat includes a plastic member, a metal foil is provided on the surface of the plastic member, and the heater provided on the surface of the plastic member is interposed by the metal foil.

Further, the heater jacket according to claim 5 of the invention provides the heater jacket according to any one of claims 1 to 4, further including: an electrical equipment unit that includes a connector configured to supply electricity to an external electric heating member; a temperature sensor that is provided inside the heat insulating mat and detects the initial temperature of the conveying subject; and an electrical equipment control unit that calculates an optimal control time needed to realize an energy-saving operation based on the initial temperature of the conveying subject detected by the temperature sensor and controls the operation of the heater and the operation of the external electric heating member based on the calculated optimal control time.

Further, the heater jacket according to claim 6 of the invention provides the heater jacket according to claim 5, wherein the electrical equipment control unit controls the operation of the heater and the operation of the electric heating member so as to delay the timing of heating each heating surface of a heating surface formed at one surface of each planar portion of the heat insulating mat and a heating surface of the electric heating member.

Further, the heater jacket according to claim 7 of the invention provides the heater jacket according to any one of claims 1 to 6, wherein the heat insulating mat is provided with a door portion that does not include the heater and has the ability to be opened or closed.

Further, the heater jacket according to claim 8 of the invention provides the heater jacket according to any one of claims 1 to 7, wherein a color of an exterior material of a heating surface formed at one surface of the planar portion and a color of an exterior material of a non-heating surface formed at the other surface are set to be different from each other.

Further, the heater jacket according to claim 9 of the invention provides the heater jacket according to any one of claims 1 to 8, wherein the heater is formed of a fluorine resin.

Further, the heater jacket according to claim 10 of the invention provides the heater jacket according to any one of claims 1 to 9, wherein the heat insulating mat includes a plastic member, a metal foil is provided on the surface of the plastic member, the heater provided on the surface of the plastic member is interposed by the metal foil, and the metal foil is affixed to the heater and the plastic member by a conductive adhesive.

Further, the heater jacket according to claim 11 of the invention provides the heater jacket according to any one of claims 1 to 10, wherein an air releasing hole is provided at the upper portion of the heat insulating mat.

Further, the heater jacket according to claim 12 of the invention provides the heater jacket according to any one of claims 1 to 11, wherein a heat transfer member is provided at the bending portion connecting the planar portions of the heat insulating mat.

Further, the heater jacket according to claim 13 of the invention provides the heater jacket according to claim 12, wherein a clamp member is provided near the heat transfer member so as to fix a bag for accommodating the conveying subject.

Further, the heater jacket according to claim 14 of the invention provides the heater jacket according to any one of claims 1 to 13, wherein an abnormal temperature detecting unit is provided so as to detect an abnormal temperature of the heat insulating mat.

Further, a container device according to claim 15 of the invention includes provides a the heater jacket according to any one of claims 1 to 14 and an electric heating board that serves as the external heat transfer member, wherein a conveying subject inside the container is heated and kept warm.

Further, a container device according to claim 16 of the invention is configured by adding a feature to the container device according to claim 15 such that the container device is formed so as to be foldable and thus wherein the heater jacket according to any one of claims 1 to 14 is folded and contained inside the container when the container device is folded.

Further, a container device according to claim 17 of the invention features that the container device is formed so as to be foldable, and the electric heating board is contained inside the container when the container device is folded, compared with the container device according to claim 15 or 16.

Further, a container device according to claim 18 of the invention features that the heat insulating mat of the heater jacket according to any one of claims 1 to 14 is disposed on the four inside side surfaces and the top surface of the container, and the electric heating board is disposed on the bottom inside surface of the container, so that the conveying subject surrounded by the heat insulating mat and the electric heating board is heated and kept warm, compared with the container device according to any one of claims 15 to 17m.

Further, a container device according to claim 19 of the invention features that a discharge port is provided at the bottom surface of the container so as to discharge the conveying subject therefrom, and the electric heating board is provided with a notch for the discharge port, compared with the container device according to claim 18.

Further, a container device according to claim 20 of the invention features that a heat transfer member is provided at the notch of the electric heating board so as to be attachable thereto and detachable therefrom, compared with the container device according to claim 19.

Further, a container device according to claim 21 of the invention features that an abnormal temperature detecting unit is provided so as to detect an abnormal temperature of the electric heating board, compared with the container device according to any of the claims 15 to 20.

Further, a container device according to claim 22 of the invention features that the electric heating board is packed by a bag member so as to prevent contaminants from adhering to the electric heating board, compared with the container device according to any of claims 15 to 21.

### EFFECTS OF THE INVENTION

According to the heater jacket of the invention, a heater jacket is provided which is attachable to and detachable from an inner surface of a container and has a heating and warming function for heating and keeping a conveying subject inside the container warm, the heater jacket including: a lightweight and flexible heat insulating mat that is formed by connecting at least one planar portion to each other in a bendable manner, the planar portion having a temperature-controllable heater embedded therein, thereby directly heating and warming the conveying subject from the planar portion by controlling the temperature of the heater depending on the purpose in use. Accordingly, it is possible to improve heating efficiency and save energy. Further, it is possible to easily and promptly attach and detach the heater jacket to and from the inner surface of the container by using the lightweight and flexible heat insulating mat formed by connecting the respective planar portions in a bendable manner.

### BRIEF DESCRIPTION OF THE DRAWINGS

FIG. 1 is an exploded diagram of a main body of a heater jacket according to the invention.
FIG. 2 is a perspective view of a container device according to the invention.
FIG. 3 is a plan view of an upper cover of a heater jacket according to the invention.
FIG. 4 is a perspective view illustrating the heater jacket and an electric heating board disposed inside the container device according to the invention.
FIG. 5 is a diagram taken along the line A-A of FIG. 1.
FIG. 6 is a diagram taken along the line C-C of FIG. 5.
FIG. 7 is a partially enlarged diagram of FIG. 6.
FIG. 8 is an exploded perspective view illustrating another example of the main body of the heater jacket.
FIG. 9 is a cross-sectional view of FIG. 8.
FIG. 10 is a cross-sectional view of an upper cover of the heater jacket according to the invention.
FIG. 11 is a diagram taken along the line B-B of FIG. 3.
FIG. 12 is a front view of a heating surface 36A of the heater jacket of the invention.
FIG. 13 is a circuit diagram illustrating an example of an electrical equipment control unit of the heater jacket of the invention.
FIG. 14 is a circuit diagram illustrating another example of the electrical equipment control unit of the heater jacket of the invention.
FIG. 15 is a circuit diagram illustrating another example of the electrical equipment control unit of the heater jacket of the invention.
FIG. 16 is a flowchart using the electrical equipment control unit of the invention.
FIG. 17 is a time chart of a heating pattern A.
FIG. 18 is a time chart of a heating pattern B.
FIG. 19 is a time chart of a heating pattern C.
FIG. 20 is a diagram illustrating a change over time of a temperature of chocolate.
FIG. 21 is a partially enlarged diagram illustrating a change over time in the temperature of chocolate.
FIG. 22 is a partially enlarged diagram illustrating a change over time in the temperature of the chocolate.
FIG. 23 is a partially enlarged diagram illustrating a change over time in the temperature of the chocolate.
FIG. 24 is a diagram illustrating a change over time of a temperature of an electric heating board and the like.
FIG. 25 is a partially enlarged diagram illustrating a change over time in the electric heating board and the like.
FIG. 26 is a partially enlarged diagram illustrating a change over time in the electric heating board and the like.
FIG. 27 is a partially enlarged diagram illustrating a change over time in the electric heating board and the like.

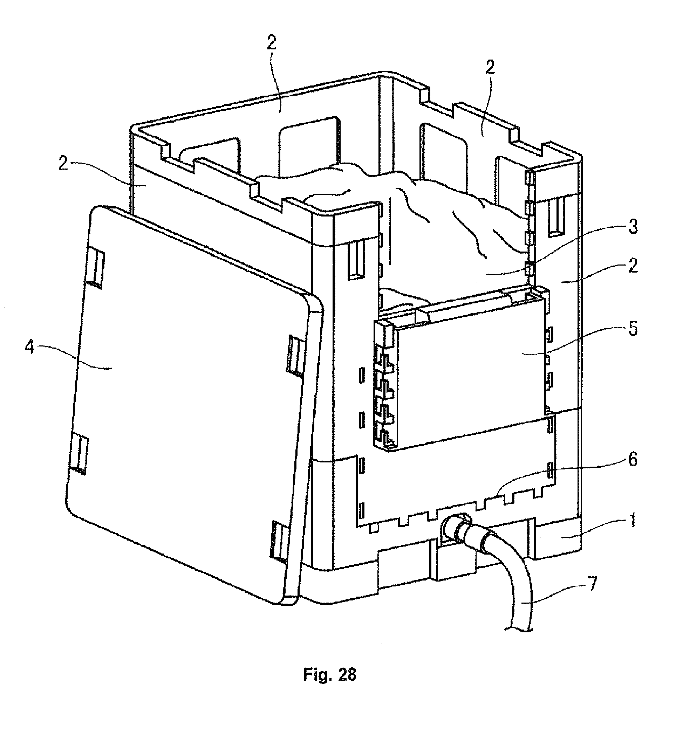

FIG. 28 is a perspective view of a container of the related art.
FIG. 29 is a perspective view when the container of the related art is folded.
FIG. 30 is a perspective view of a heating panel of the related art.
FIG. 31 is a cutaway perspective view illustrating another container device according to the invention.
FIG. 32 is an internal perspective view of another electric heating board according to the invention.
FIG. 33 is a plan view of another electric heating board according to the invention.
FIG. 34 is a perspective view of a heat transfer member provided in a notch of the electric heating board.
FIG. 35 is a circuit diagram illustrating another example of the electrical equipment control unit.
FIG. 36 is a schematic expansion plan of another heater jacket according to the invention.
FIG. 37 is a diagram illustrating the effect of an air releasing hole.

### BEST MODE FOR CARRYING OUT THE INVENTION

Hereinafter, an embodiment of a heater jacket and a container device including the same according to the invention will be described in detail by referring to the drawings. Furthermore, the invention is not limited to the embodiment.

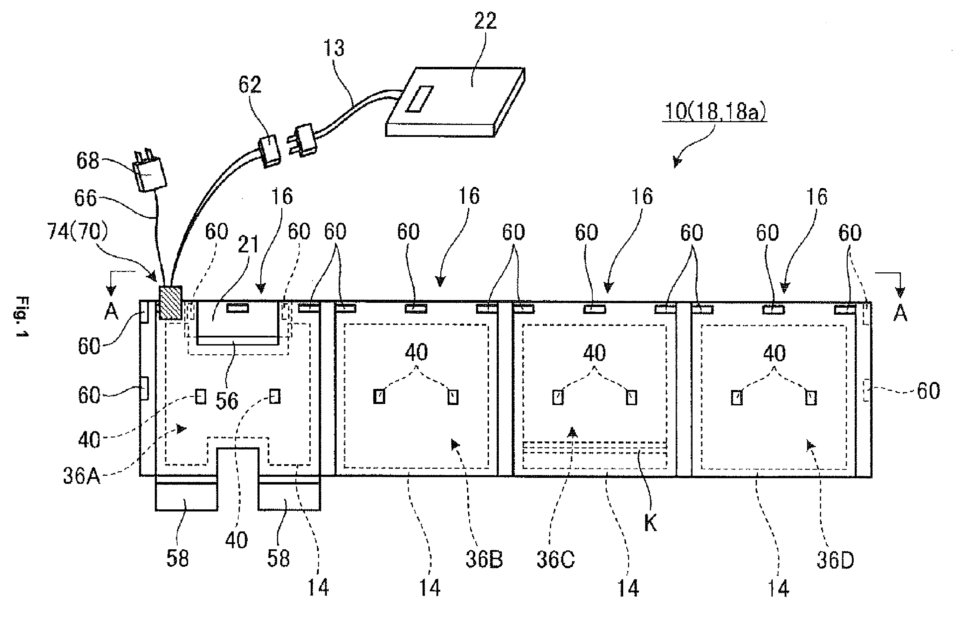

As shown in FIGS. 1 to 3, a heater jacket 10 according to the invention is a heater jacket that is attachable to and detachable from an inner surface of a container body 12 and has a heating and warming function for heating and keeping a conveying subject such as oil charged in an inner bag (not shown) inside the container body 12 warm, and includes a main body 18 formed of four planar portions 16 with a temperature-controllable heater 14 embedded therein and includes an upper cover 20. The main body 18 is formed of a heat insulating mat 18a which is formed by connecting four planar portions 16 in a bendable manner and is lightweight and flexible, and includes a door portion 21. The bendable manner mentioned herein includes the meaning that the planar portion is bent by approximately 180° so that the planar portions adjacent to each other are foldable to face each other.

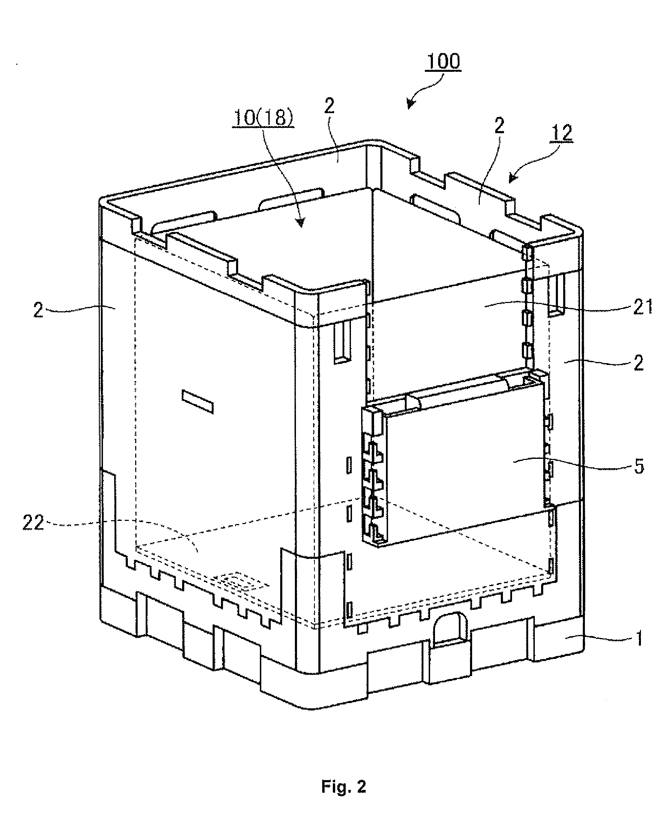

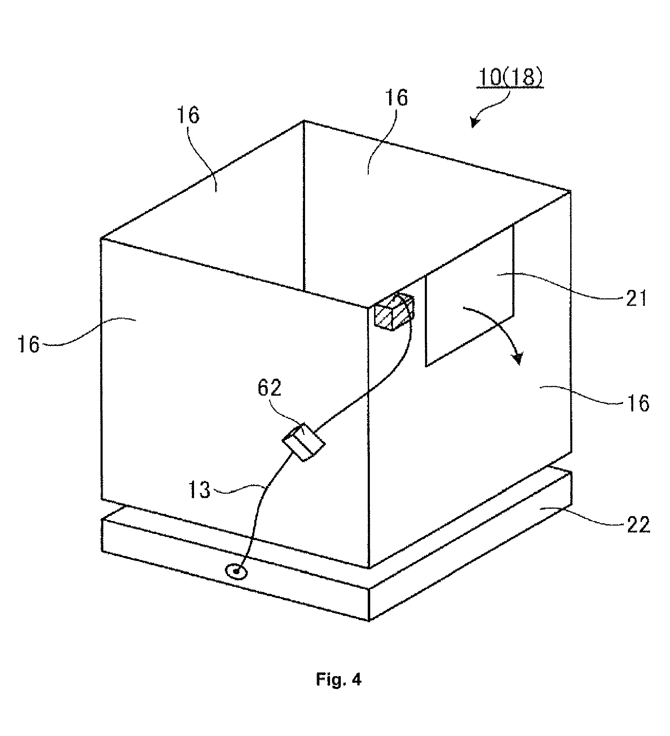

FIG. 4 is a perspective view illustrating a state where the heater jacket and the electric heating board are taken out of the container device. As shown in FIGS. 4 and 2, a container device 100 according to the invention includes an assembly container body 12 that is formed of a heat insulating material in a hollow box shape, the heater jacket 10 of the invention, and an electric heating board 22 serving as an external heat transfer member. The heater jacket body 18 is disposed on the four inside side surfaces of the container body 12, the electric heating board 22 is disposed on the bottom inside surface of the container body 12, and the upper cover 20 (not shown) is disposed on the top surface of the container body 12, thereby heating and warming the conveying subject surrounded by the heater jacket 10 and the electric heating board 22.

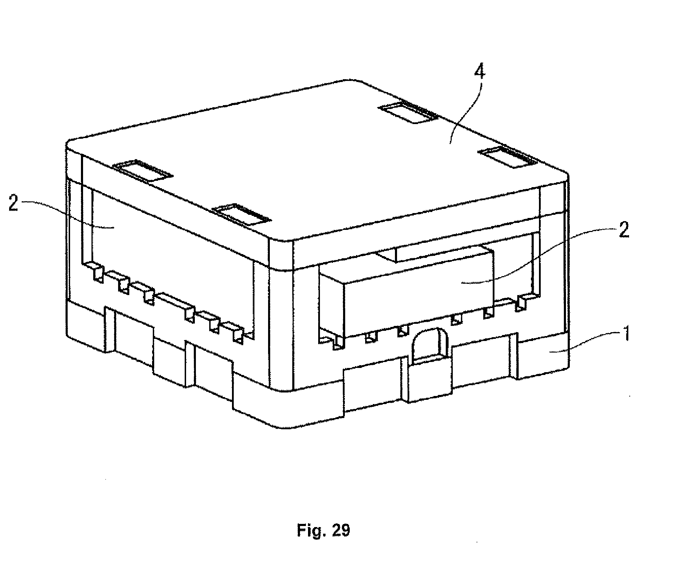

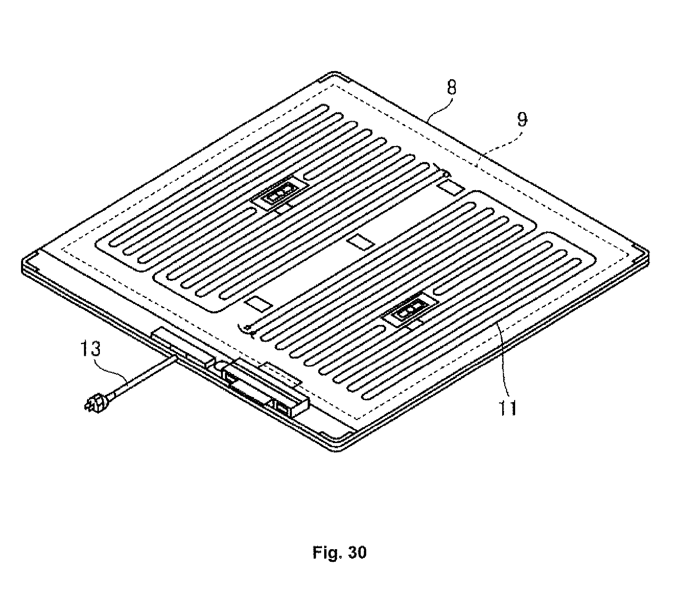

The container device 100 is configured to be foldable, and may accommodate the heater jacket 10 inside the container body 12 together with the electric heating board 22 when being folded. The folded shape is the same as that of FIG. 29. As the electric heating board 22, the heating panel of Patent Literature 7 shown in FIG. 30 may be used. For example, an electric heating board with an output of approximately 880 W may be used. The electric heating board 22 may be used while being packed in a poly bag (a bag member) so as to prevent adherence of contaminants or degradation.

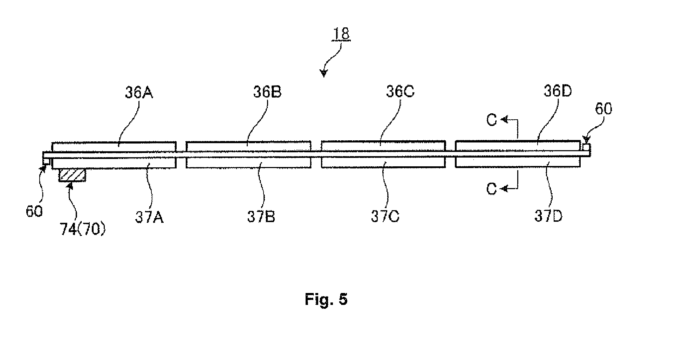

As shown in FIGS. 5 to 7, each planar portion 16 of the heater jacket 10 includes a heat insulating material 24, an insulating material 26, a reinforcement material 28 (a plastic member), an exterior material 30, an embedded cord shaped heater 14, and an aluminum foil 34 (a metal foil).

The heat insulating material 24 is a urethane foam that has a thickness of approximately 5 mm and is flame-resistant.
The insulating material 26 is a plastic cardboard that has a thickness of approximately 2 mm, and is used in a process for insulating the heater 14 with a thickness of approximately 1 mm or more ensured.

The exterior material 30 is a heat-resistant vinyl chloride material that is formed by attaching a PVC coating onto a polyester fabric. In the exterior material 30, the heating surface 36 is colored red, and the non-heating surface 37 is colored blue. In this way, since the heating surface 36 and the non-heating surface 37 are colored differently, an operator may not erroneously install the planar portion inside the container 12, that is, may not reverse the front side to the rear side.

A reinforcement material 28 is a plastic cardboard (a plastic member) that has a thickness of approximately 5 mm, and is rigid to the extent that it has an ability to stand by itself when being disposed in the lateral direction K. For this reason, the heat jacket may lean against the container when the operator installs the heat jacket inside the container 12. Further, since the heat jacket stands by itself when being installed inside the container 12, there is no concern that the heat jacket will collapse therein.

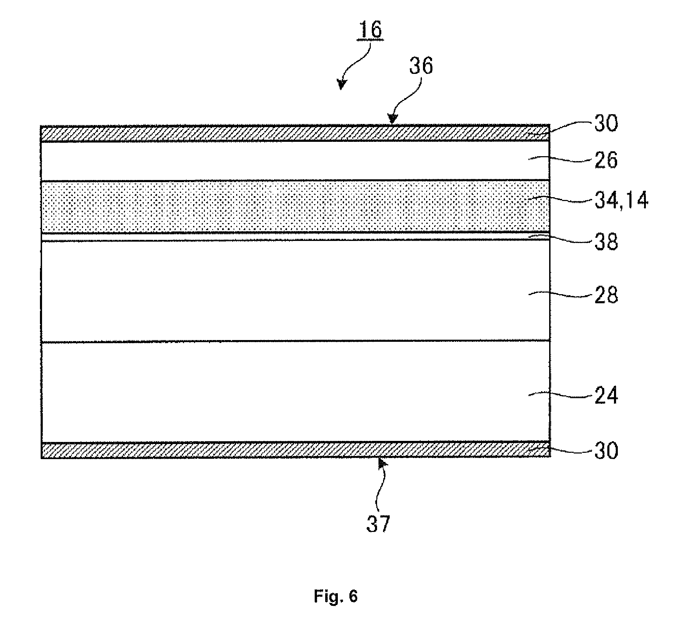

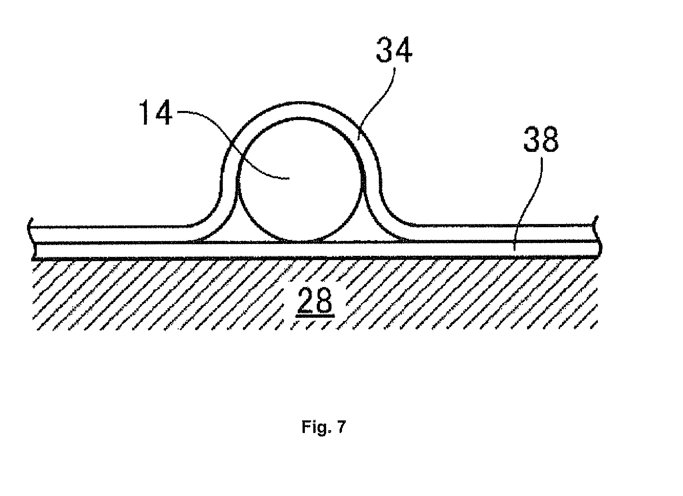

The heater 14 is a cord-shaped heater that is formed by coating a copper nickel wire with silicon rubber. As shown in FIGS. 6 and 7, the heater 14 is attached to a double-sided tape 38 attached to the heating surface 36 of the reinforcement material 28, and is coated with an aluminum foil 34. The aluminum foil 34 is connected to a ground terminal (not shown) . By attaching the aluminum foil 34 in the double-sided tape 38, the heater 14 is prevented from being damaged by the oil corresponding to the conveying subject permeating from the side of the heating surface 36. Furthermore, the aluminum foil 34 may be attached by a depositing method. Further, instead of the aluminum foil 34, a conductive metal foil may be used which has the effect of evenly heating the heating surface 36 and prevents the permeation of oil.

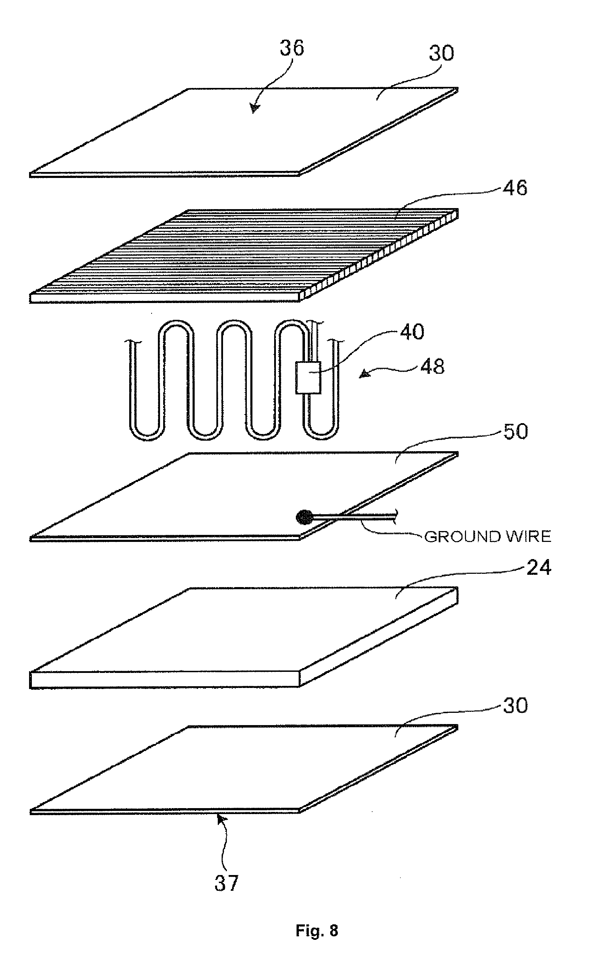

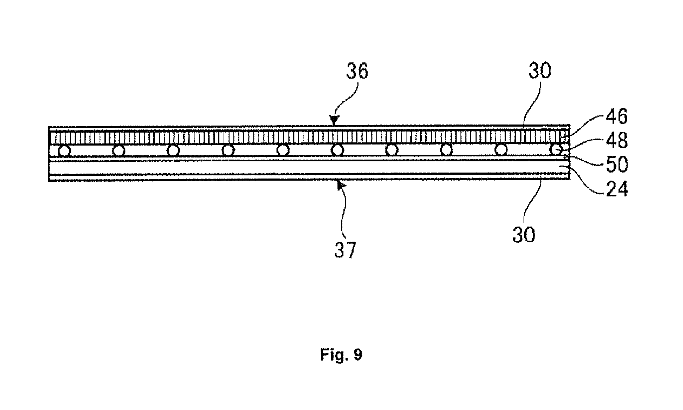

Here, as shown in FIGS. 8 and 9, a plastic cardboard 46 having a thickness of approximately 5 mm may be used instead of the insulating material 26 formed of a plastic cardboard having a thickness of approximately 2 mm, a PFA cord heater 48 formed by coating a fluorine resin (PFA) such as Teflon (registered trademark) thereon may be attached to the non-heating surface 37 of the plastic cardboard 46, and an aluminum foil 50 may be attached thereon. Since the PFA cord heater 48 has excellent heat-resistant and drug-resistant performances, the PFA cord heater is not easily affected by the permeation of the oil from the conveying subject. Further, the aluminum foil 50 may be affixed by a conductive adhesive or a conductive aluminum foil adhesion tape. In this way, it is possible to obtain a ground when the insulation of the heater is broken.

In this way, due to the selection of the reinforcement material 28 formed of the plastic cardboard that has an excellent heat insulating property and is thin and lightweight and the even heating effect using the aluminum foil 34, the total thickness of the heater jacket 10 may be thinned so as to be approximately 20 mm or less. Further, since the weight of the heater jacket 10 used in a 1-ton container is approximately 16 kg, a decrease in the total weight may be realized. For this reason, the heater jacket 10 may be installed into the container 12 by only one operator.

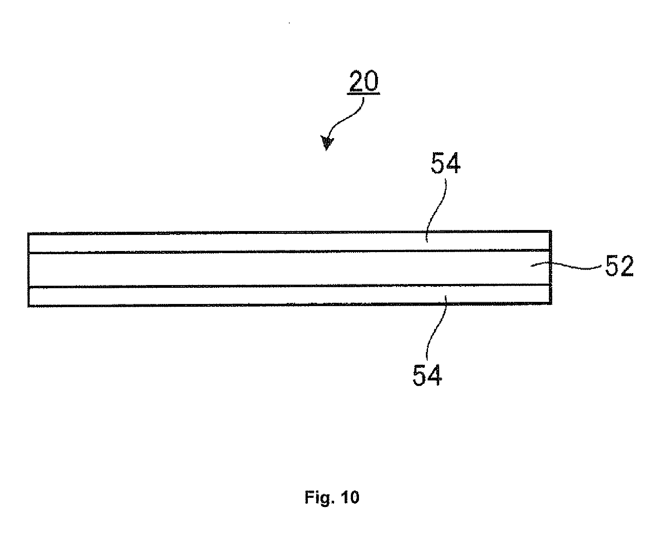

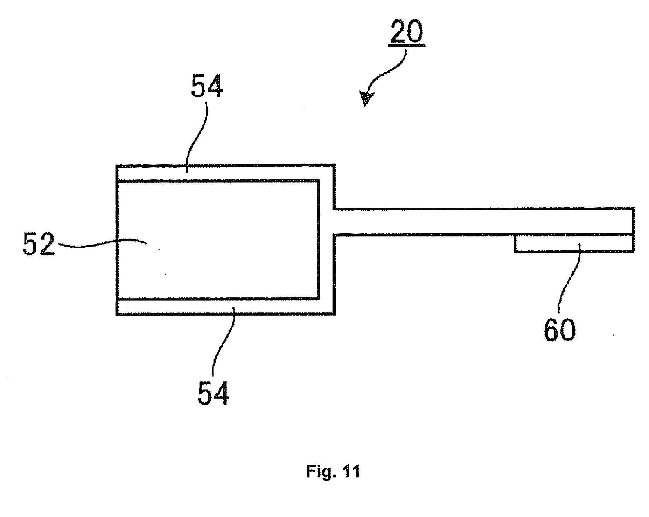

As shown in FIGS. 2, 10, and 11, the upper cover 20 is formed by coating the exterior material 54 on the heat insulating material 52 that is formed of a flame-resistant urethane foam and has a thickness of approximately 20 mm. Since the upper cover 20 is disposed on the top surface of the container when being attached to the container body 12, a heater and a temperature sensor are not embedded in the upper cover in consideration of the input of raw materials and the maintenance workability from the top of the container.

As shown in FIGS. 1, 4, and 12, the door portion 21 is provided at the center upper edge of the heating surface 36A of the planar portion 16, is formed in a valve shape with a notch laterally elongated, and is configured to be openable closeable by being bent forward and backward at the hinge portion 56. When the heater jacket 10 and the BIB are provided inside the container body 12, the operator's hand may easily reach a discharge port (not shown) at the bottom side inside the container body 12 while the door portion 21 is opened. In this way, the maintenance work which should be done inside the container body 12 may be easily performed. The door portion 21 does not include a heater or a temperature sensor, and is formed by coating an exterior material on a heat insulating material that is formed of flame-resistant urethane foams interposing a reinforcement material formed of a plastic cardboard having a thickness of approximately 5 mm.

Further, as shown in PIGS. 1 and 12, the heater jacket 10 further includes tongue-shaped lower heat insulating portions 58 that are provided at the left and right lower ends of the heating surface 36A of the planar portion 16. The lower heat insulating portion 58 is used to insulate the heat of the lower discharge space of the heating surface 36A, and is formed by coating an exterior material on a heat insulating material that is formed of flame-resistant urethane foam and having a thickness of approximately 20 mm. In the embodiment, a case is assumed in which the size of the surface of the electric heating board 22 disposed on the inner bottom surface of the container body 12 is much smaller than the size of the inner bottom surface of the container body 12. In this case, a portion without the heat insulating material may be present at the lower discharge-side space of the container body 12. For this reason, the lower heat insulating portion 58 is provided so as to insulate the heat the lower discharge-side space.

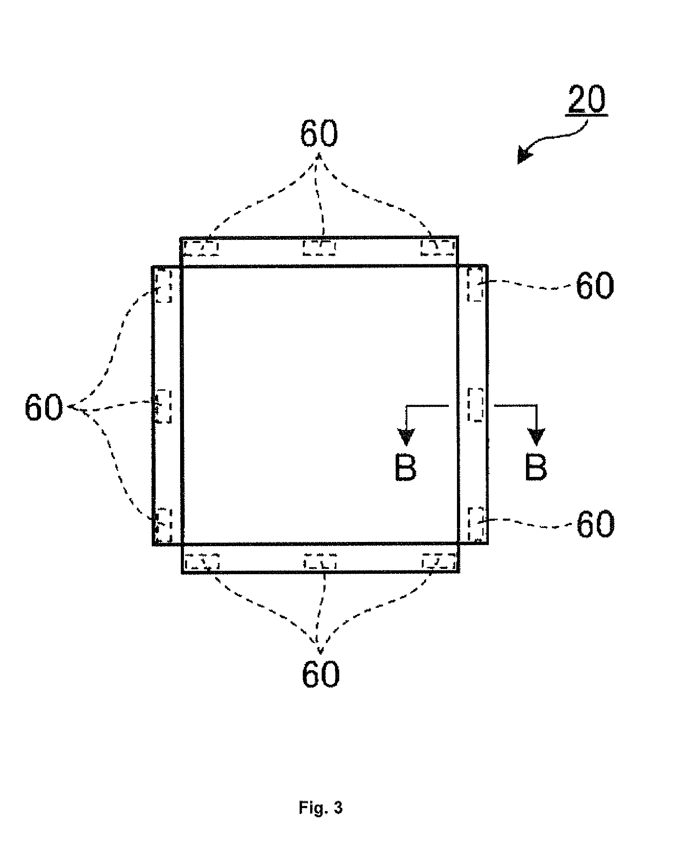

Further, as shown in FIGS. 1 and 3, the heater jacket 10 further includes magic tapes (registered trademark) 60 that are disposed on the upper edge and the side end of the heater jacket body 18 and the entire edges of the upper cover 20. The magic tape 60 is provided so as to connect the side ends of the heater jacket body 18 to each other. In the case where the heater jacket 10 is attached to the inner surface of the container, the heater jacket body 18 is inserted into the container in the folded state, and the ends are bonded to each other by the magic tapes 60 so as to form a quadrangular cylindrical shape opened upward. Then, the upper cover 20 is placed on the opening, and the entire edges and the upper edge are bonded to each other through the magic tapes 60. In this way, since the main body 18 of the heater jacket 10 of the invention is formed as a foldable structure with four integrated surfaces, it is not necessary to connect the respective planar portions 16 with a fastener or the like, so that the installation work can be done in a short time when the heater jacket is provided at the inner surface of the container. Furthermore, a configuration without the magic tapes 60 may be employed.

Further, as shown in FIG. 1, the heater jacket 10 further includes a connector 62, a power supply cord 66 that receives electricity from an external power supply (AC 100V) 64, and an electrical equipment unit 70 that has a rubber plug 68. The connector 62 is provided so as to be connected to the power supply cord 13 extending from the electric heating board 22 provided at the bottom inside surface of the container. The rubber plug 68 is not integrated with the power supply cord 66, but is attachable thereto and detachable therefrom so that it is replaceable in the case of even when the plug portion is pressed and deformed at the time of using the rubber plug. Further, the power supply cord 66 also serves to supply power to the electric heating board 22 and is formed as a single unit.

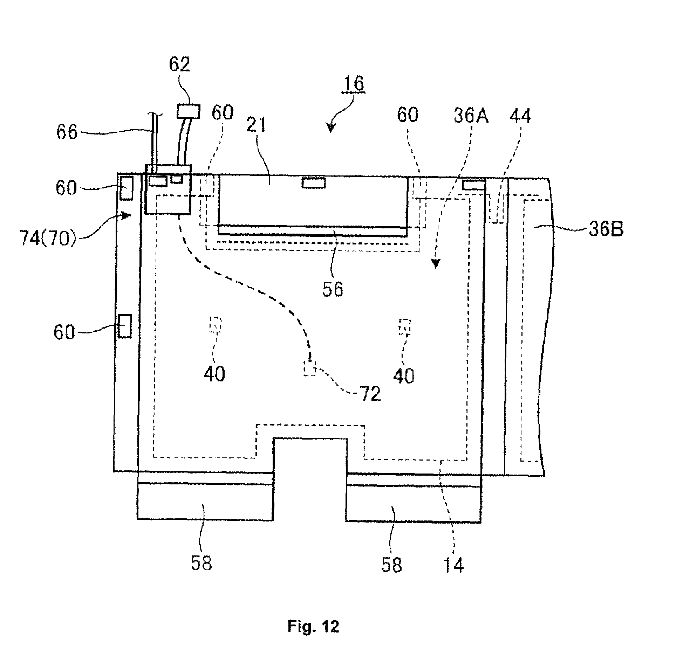

Further, as shown in FIG. 12, the heater jacket 10 further includes a temperature sensor 72 that is provided at a portion slightly below the center of the heating surface 36A of the heat insulating mat 18a and detects the initial temperature of the conveying subject. Further, the heater jacket 10 further includes an electrical equipment control unit 74 that is connected to the electrical equipment unit 70, calculates the optimal control time needed to realize an energy-saving operation based on the initial temperature of the conveying subject detected by the temperature sensor 72, and controls the operation of the heater 14 and the operation of the electric heating board 22 through an automatic temperature control device 40 based on the calculated optimal control time.

The electrical equipment control unit 74 is provided at the left upper portion of the heating surface 36A, and is configured to control the operation of the heater 14 and the operation of the electric heating board 22 so as to delay the timings of heating the heating surfaces 36A to 36D of the respective planar portions 16 of the heat insulating mat 18a and the heating surface of the electric heating board 22.

In this way, according to the invention, since the electrical equipment unit 70 including the power supply cord connection connector 62 of the electric heating board 22 is connected to the electrical equipment control unit 74 controlling the temperature of the heater jacket 10, it is possible to optimally control the heater 14 of the heater jacket 10 and the electric heating board 22 at the same time. Further, since the current fuse is provided in the electrical equipment control unit 74 in a replaceable manner, it is possible to improve the maintenance workability.

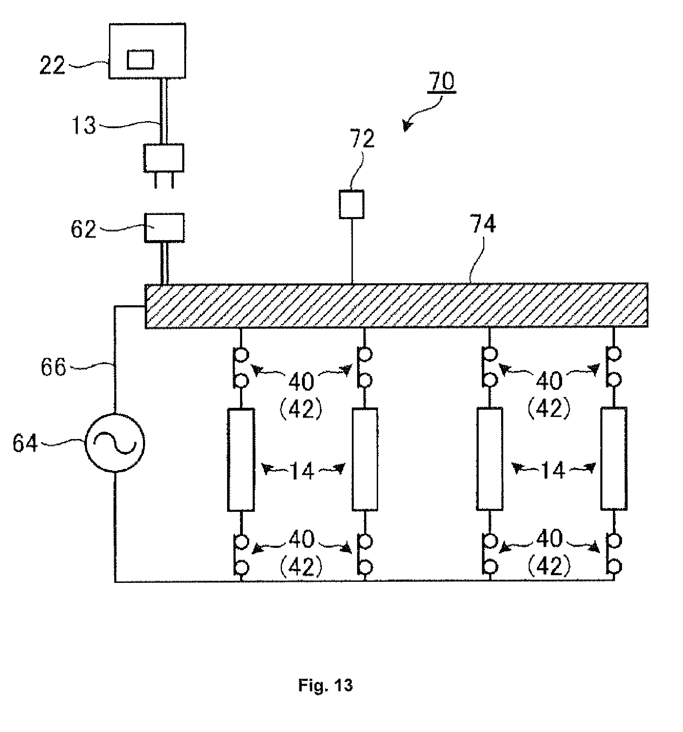

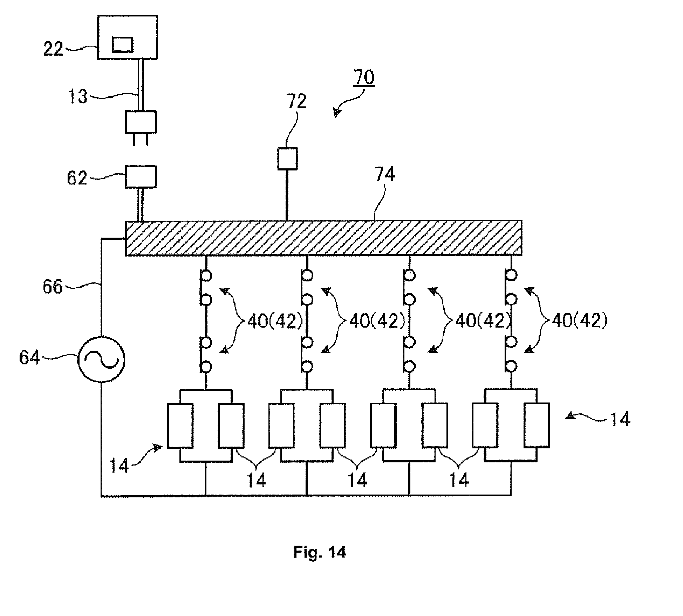

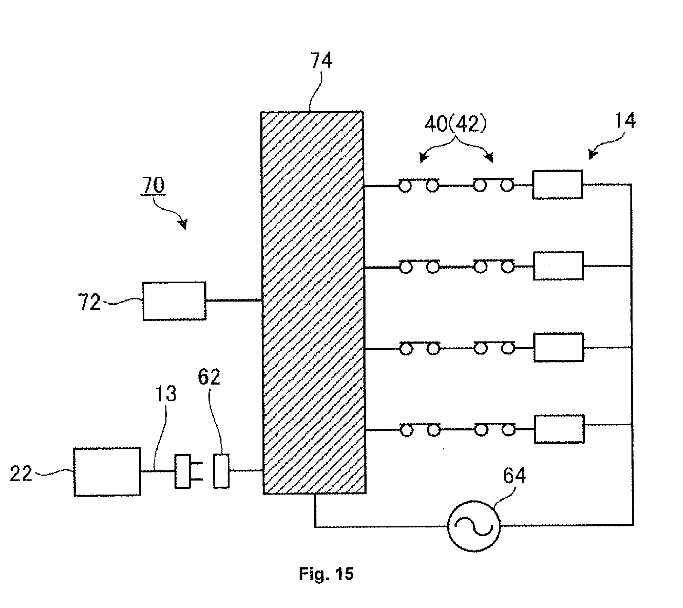

FIG. 13 is a circuit diagram illustrating an example of the electrical equipment control unit of the heater jacket of the invention, and FIGS. 14 and 15 are circuit diagrams illustrating another example of the electrical equipment control unit of the heater jacket.

As shown in FIGS. 13 to 15, the heater 14 includes an automatic temperature control device 40 that serves as a temperature control unit and a fuse 42 that serves as a circuit-breaking unit. As shown in FIGS. 12 and 1, since the heaters 14 of the respective heating surfaces 36A to 36D are connected to an interconnection 44 and the respective planar portions 16 are foldable, the interconnection portion of the folding line portion between the adjacent planar portions 16 is disposed in a loose state so as to prevent short-circuiting as shown in FIG. 12. The outputs of the heaters 14 of the heating surfaces 36A, 36B, 36C, and 36D are respectively 115 W.

As shown in FIG. 1, two automatic temperature control devices 40 are provided for each of the heaters 14 of the respective heating surfaces 36A, 36B, 36C, and 36D, and are set to be turned off at the set temperature of 50°C and are turned on at the set temperature of 40°C. The fuse 42 is provided to break the circuit in the event of abnormality, and is mounted into each automatic temperature control device 40.

The operation and the effect of the above-described configuration will be described.
When the heater jacket of the invention is attached to the inner surface of the container and the power supply is turned on, the temperature sensor 72 measures the temperature of the conveying subject for a predetermined time (for example, five minutes). In the mean time, the electrical equipment control unit 74 controls the heating surfaces 36A, 368, 36C, and 36D and the electric heating board 22 so that they do not give off heat.

As a method of controlling a temperature using the electrical equipment control unit 74 of the heater jacket of the invention, two cases may be largely classified, where one case is a case in which a substance such as chocolate melted around 40°C is heated and kept warm as it is and the other case is a case in which a substance such as oil (hardened oil) cooled and stored in a ripening room maintained at 20°C is heated and melted up to a normal temperature. Hereinafter, a case will be described in which the conveying subject is the chocolate.

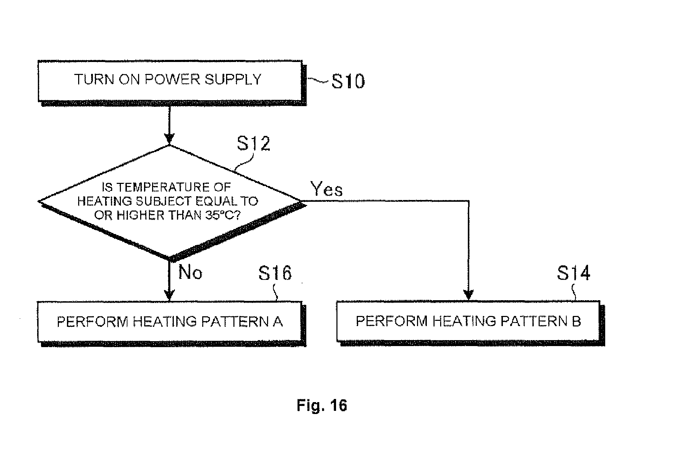

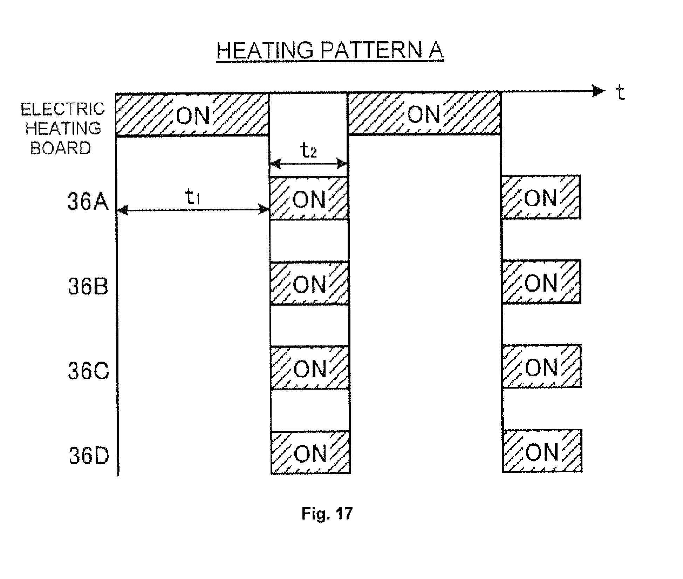

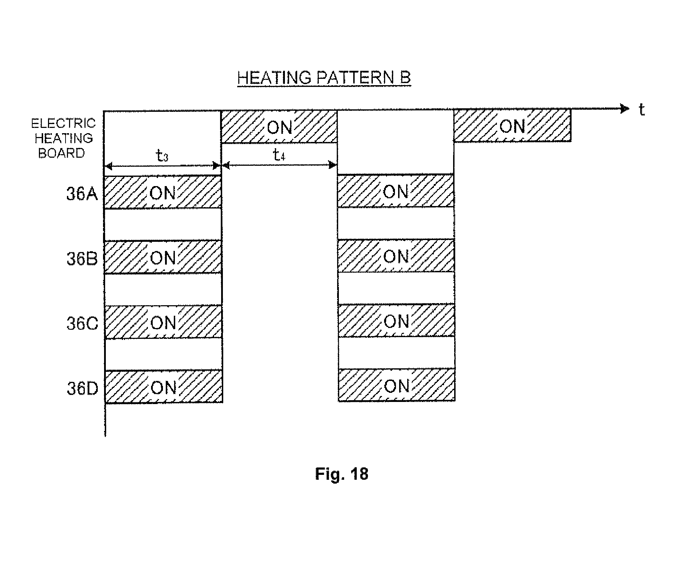

As shown in the flowchart of FIG. 16, when the electric heating board 22 is connected to the connector 62 so as to turn on the heater jacket 10 (step S10), the temperature sensor 72 detects the temperature of the conveying subject, and the electrical equipment control unit 74 determines whether the temperature is equal to or higher than 35°C (step S12). Since the chocolate begins to be solidified in the temperature range of 37°C to 40°C, in the case in which the temperature is equal to or higher than 35°C, the electrical equipment control unit 74 controls the electric heating board 22 and the heater 14 so that they are operated in an energy-saving mode (a heating pattern B shown in FIG. 18) consuming a small amount of electricity in total (step S14). In the case in which the temperature is lower than 35°C, the electrical equipment control unit 74 controls the electric heating board 22 and the heater 14 so that they are operated in a forced heating mode (a heating pattern A shown in FIG. 17) (step S16).

As shown in FIG. 17, in the case of the heating pattern A, first, only the electric heating board 22 is turned on so that heating is continuously performed for time t1. After the time t1 has elapsed, the electric heating board 22 is turned off and the heaters 14 of the respective heating surfaces 36A to 36D are turned on so that heating is continuously performed for time t2. After the time t2 has elapsed, the heater 14 is turned off, the electric heating board 22 is turned on, and then the electric heating board 22 and the heater 14 are alternately turned on and off in a repeated manner.

As shown in FIG. 18, in the case of the heating pattern B, first, the heaters 14 of the respective heating surfaces 36A to 36D are turned on so that heating is continuously performed for time t3. After the time t3 has elapsed, the heaters 14 of the respective heating surfaces 36A to 36D are turned off and the electric heating board 22 is turned on so that heating is continuously performed for time t4. After the time t4 has elapsed, the electric heating board 22 is turned off, the heaters 14 of the respective heating surfaces 36A to 36D are turned on, and then the electric heating board 22 and the heater 14 are alternately turned on and off in a repeated manner.

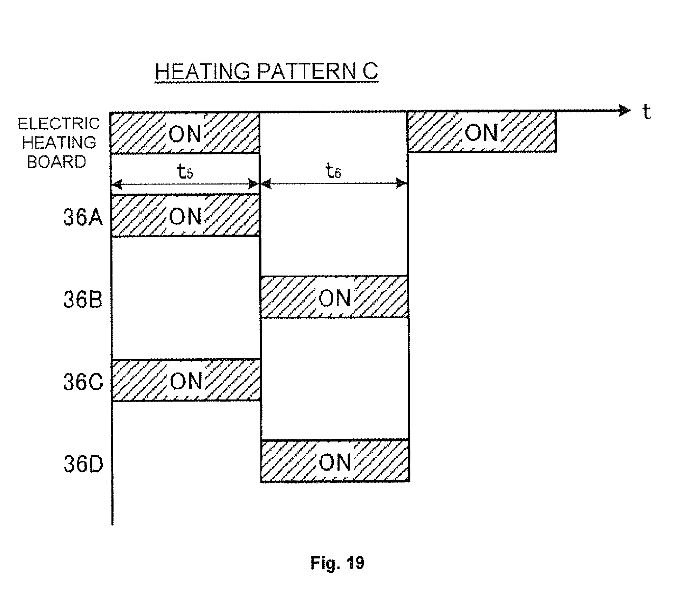

Further, as shown in a heating pattern C of FIG. 19, the electrical equipment control unit 74 may heat the electric heating board 22 and the heating surface 36A and the heating surface 36C of the heater jacket 10 for time t5 in accordance with the detection temperature of the temperature sensor 72. Then, the electrical equipment control unit may turn off the operation, heat the heating surface 36B and the heating surface 36D for time t6, and then control the heating time of the respective heating surfaces 36A to 36D and the electric heating board 22, whereby a positional and temporal change in temperature may be forcedly generated. In this way, since the four peripheral surfaces of the heater jacket 10 and the electric heating board 22 are turned on and off by delaying the heating timings thereof, it is possible to promote the convection between an upper layer, a middle layer, and a lower layer inside a highly viscous conveying subject such as chocolate and efficiently heat the entire part thereof. Accordingly, it is possible to decrease a difference in temperature in the conveying subject and suppress a decrease in temperature of the conveying subject at the time of conveyance while the power supply is turned off.

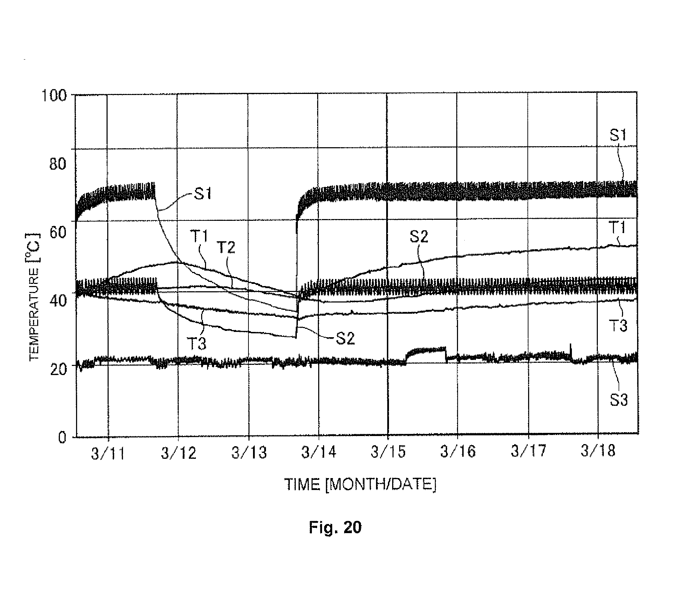

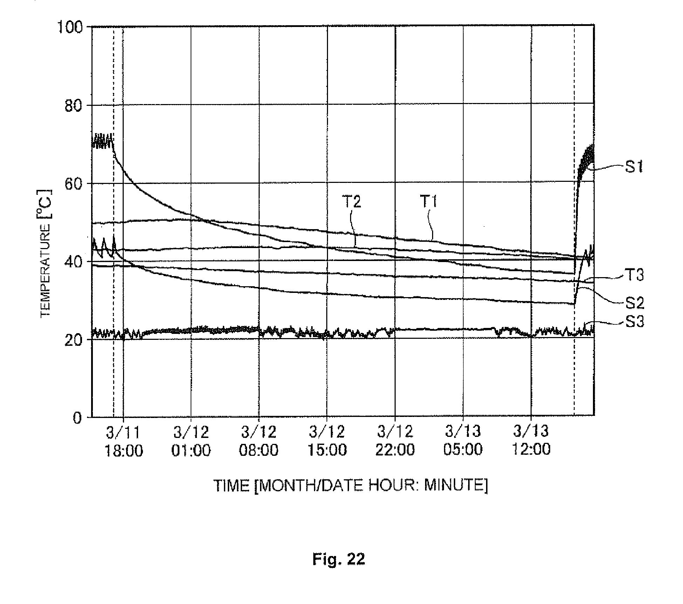

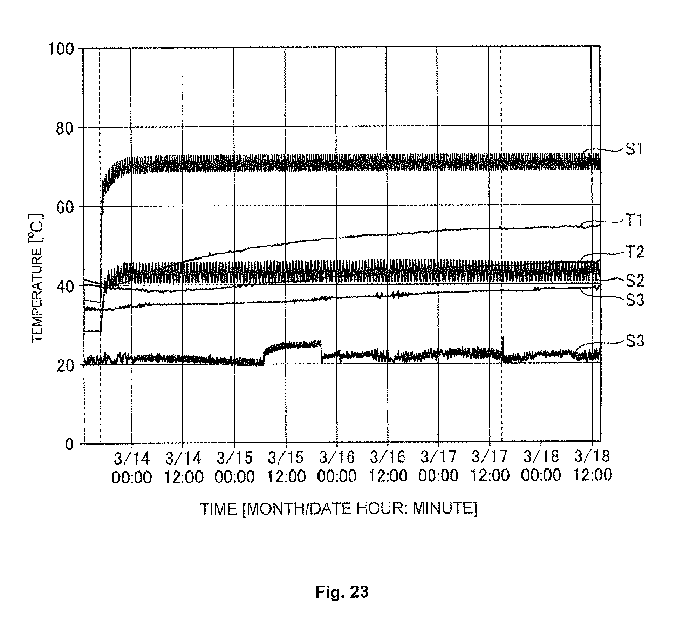

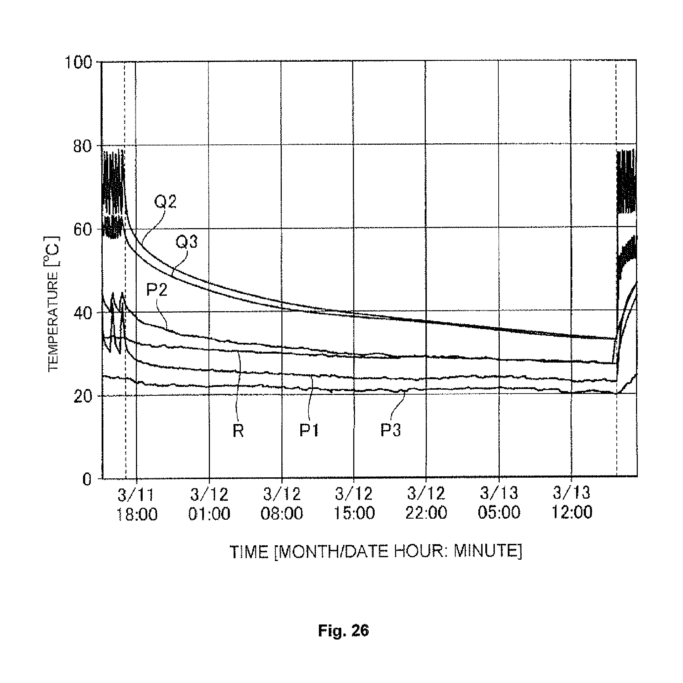

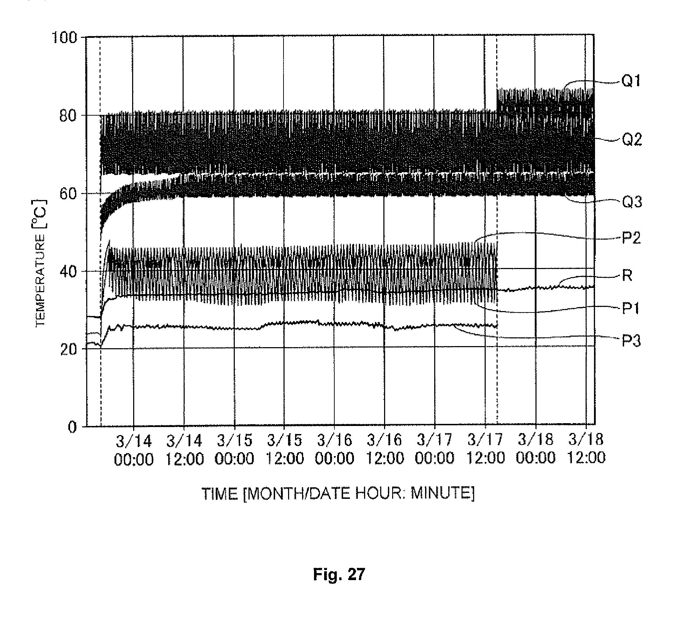

Next, the result of a temperature test performed for verifying the effect of the invention will be described by referring to FIGS. 20 to 27.

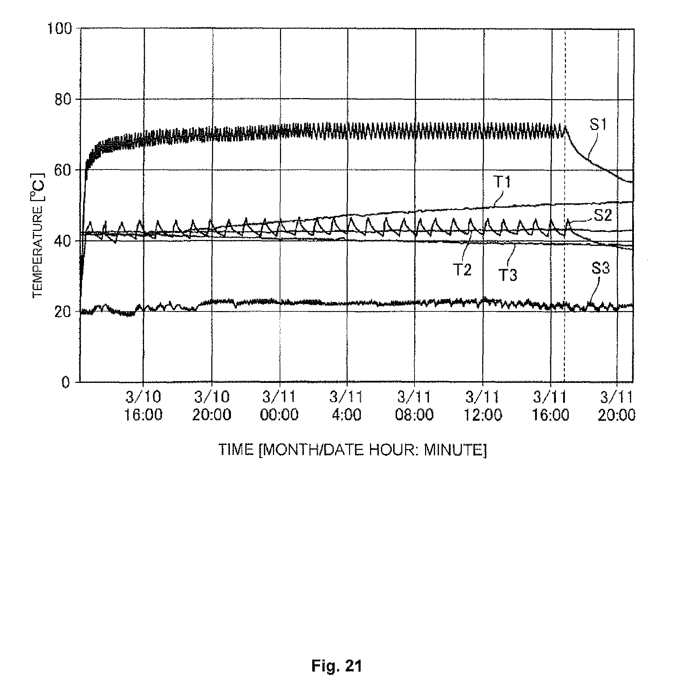

FIGS. 20 to 23 show a change in temperature over time of the upper, middle, and lower layers of chocolate as a conveying subject. The vertical axis indicates the temperature, the horizontal axis indicates the time, T1 indicates the temperature of the liquid of the chocolate at the lower layer, T2 indicates the temperature of the liquid of the chocolate at the middle layer, and T3 indicates the temperature of the liquid of the chocolate at the upper layer. Further, S1 indicates the temperature of the center of the heating surface of the electric heating board, S2 indicates the temperature of the right surface of the heater jacket, S3 indicates the temperature around the place where the container is disposed, and S3 is maintained at approximately 20°C. Furthermore, the electric heating board is set to be turned off at 75°C and is turned on at 65°C. Further, the heater of the heater jacket is set to be turned off at 50°C and is turned on at 40°C. Furthermore, FIGS. 21 to 23 are graphs in which the scale of the horizontal axis of FIG. 20 is magnified and partially displayed.

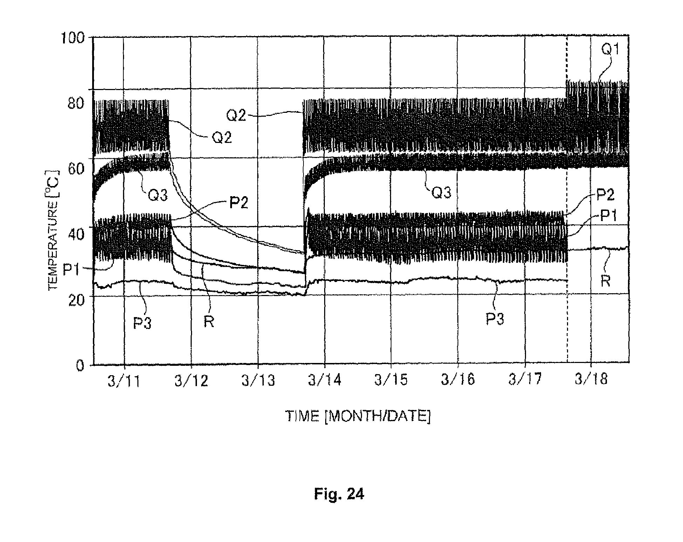

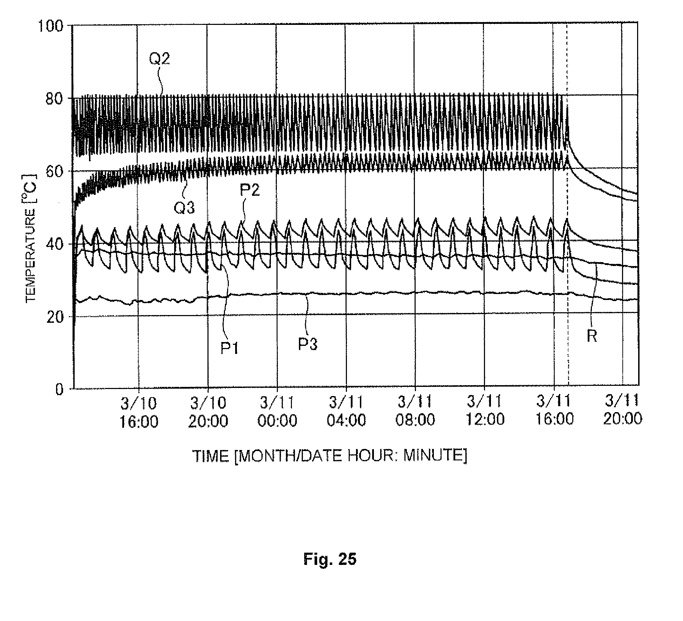

Further, FIGS. 24 to 27 show a change in temperature over time of the electric heating board and the like. The vertical axis indicates the temperature, the horizontal axis indicates the time, P1 indicates the surface temperature of the door portion of the front surface of the heater jacket, P2 indicates the surface temperature of the center of the front surface of the heater jacket, and P3 indicates the surface temperature of the outer portion of the container. Further, Q1 indicates the surface temperature of the electric heating board, Q2 indicates the detection temperature of the temperature sensor embedded in the electric heating board, and Q3 indicates the temperature of the safety fuse portion embedded in the electric heating board. R indicates the temperature of the liquid of the top surface of the chocolate. Furthermore, FIGS. 25 to 27 are graphs in which the scale of the horizontal axis of FIG. 24 is magnified and partially displayed.

As shown in FIGS. 20 to 27, the electric heating board and the heater are turned on while the temperature of the liquid of the chocolate is at approximately 40°C, and the initial heating is performed for approximately 28.5 hours. In this case, S1 is maintained at 75°C or less, and the temperature of the liquid of the lower layer of the chocolate increases up to approximately 50°C. In this way, it is found that the electric heating board may heat the chocolate without any sticking. When the electric heating board and the heater are turned off after the initial heating and the electric heating board and the heater are turned on again after 47.5 hours, the temperature of the liquid of the chocolate increases. In this way, it is possible to control the temperature of the liquid of the chocolate inside the container so that the temperature becomes 60°C or less through the control of the electrical equipment control unit of the heater jacket of the present invention.

### [Modified Example]

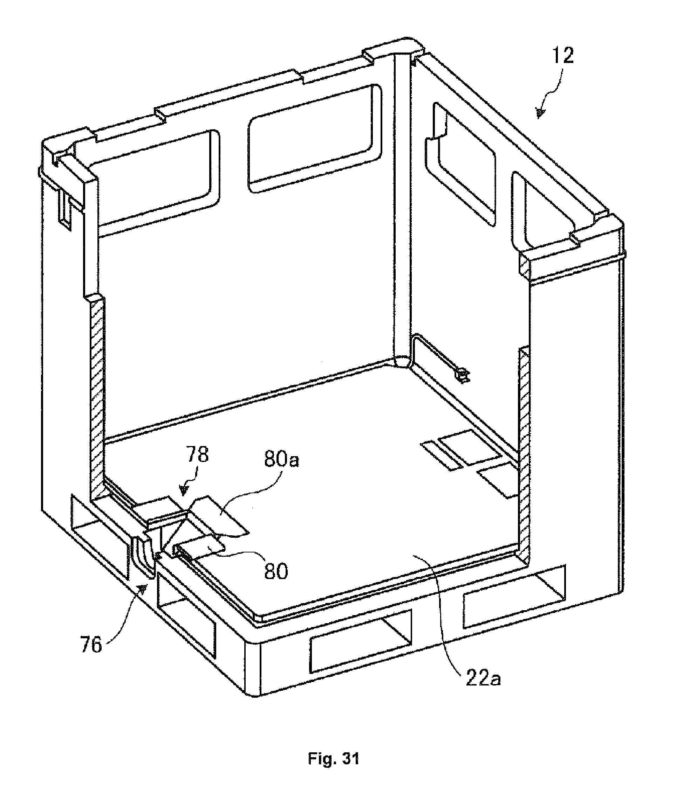

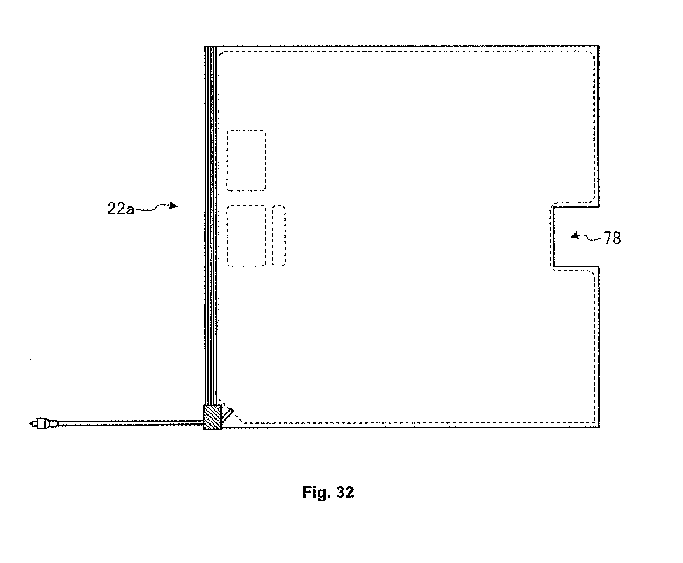

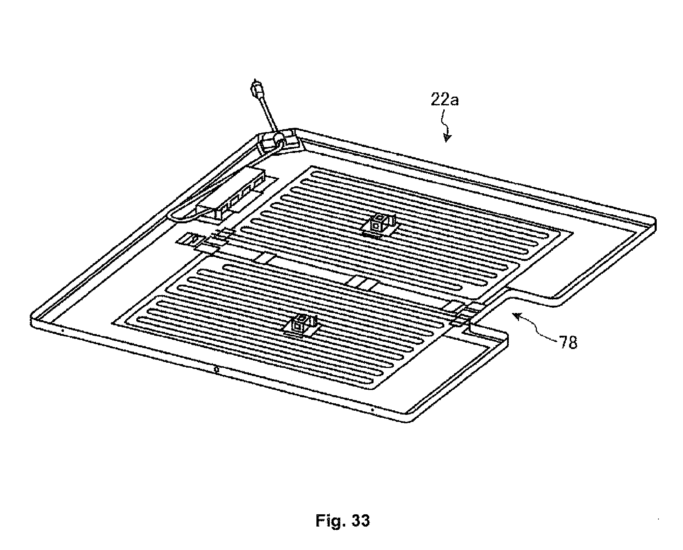

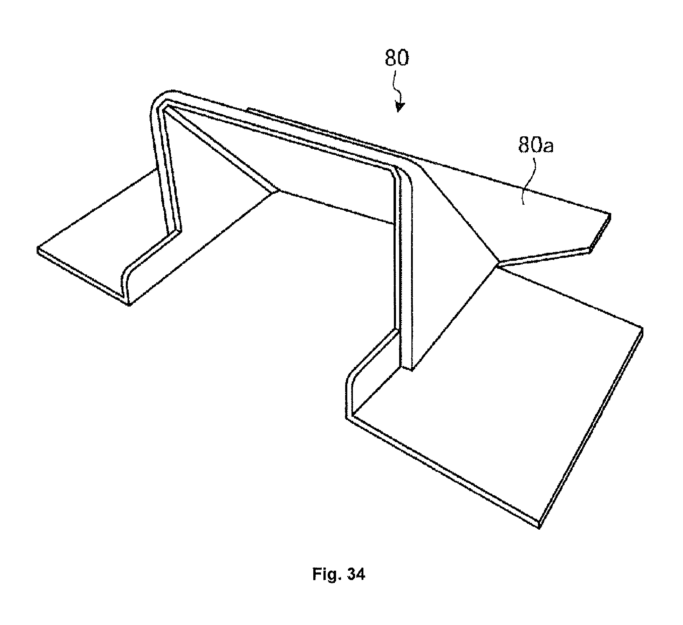

Next, a modified example of the heater jacket and the container device including the same according to the invention will be described by referring to FIGS. 31 to 37.

As shown in FIGS. 31 to 34, an electric heating board 22a is provided so as to cover the entire bottom surface of the container 12, a discharge port 76 for discharging the conveying subject is provided at the front bottom surface of the container 12, and a notch 78 is provided at the front center edge of the electric heating board 22a so as to correspond to the discharge port 76. Then, a heat transfer member 80 shown in PIG. 34 is provided at the notch 78 so as to be attachable thereto and detachable therefrom. The heat transfer member 80 is formed of a material such as aluminum that has an excellent heat transfer property, has a contact portion 80a with respect to the heating surface of the electric heating board 22a, and is used to improve solubility at the discharge port 76 by using the surface heat of the electric heating board 22a. For this reason, even when the conveying subject near the discharge port 76 is cooled and solidified, the conveying subject may be melted by using the heat from the heat transfer member 80.

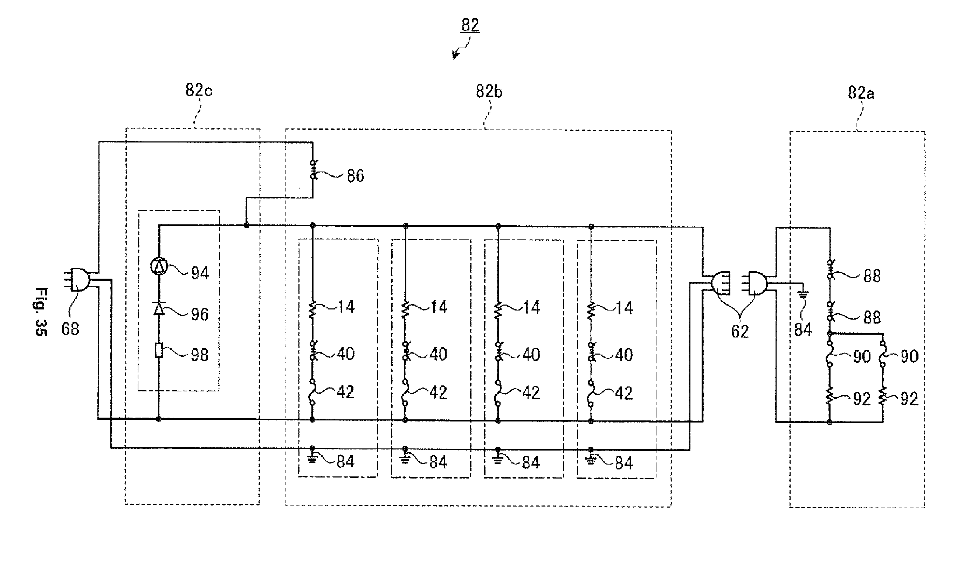

Further, an abnormal temperature detecting unit 82 may be provided so as to detect the abnormal temperature of the heat insulating mat 18a. In this case, as shown in FIG. 35, the abnormal temperature detecting unit 82 includes an electric heating board detecting portion 82a, a heater jacket detecting portion 82b, and a joint box portion 82c. The electric heating board detecting portion 82a may be electrically connected to the heater jacket detecting portion 82b through the connector 62.

The heater jacket detecting portion 82b includes the automatic temperature control device 40, the fuse 42, the heater 14, a ground 84, and an abnormal temperature detecting automatic temperature control device 86. The electric heating board detecting portion 82a includes an automatic temperature control device 88, a fuse 90, a heater 92, and the ground 84. The joint box portion 82c includes an LED 94, a diode 96, and a resistor 98, and is provided in the electrical equipment unit 70 (not shown).

In this configuration, when the abnormal temperature detecting automatic temperature control device 86 detects the abnormal temperature of the heat insulating mat 18a, the abnormal temperature detecting automatic temperature control device may control the heater 14 so that the output thereof increases or decreases and inform the container's user of the abnormal temperature by turning on the LED 94. The electric heating board may be provided with the same type of abnormal temperature detecting unit, and the heater jacket 10 and the heater of the electric heating board may be individually controlled so that the outputs thereof increase or decrease on the basis of the detection of the abnormal temperature detecting unit.

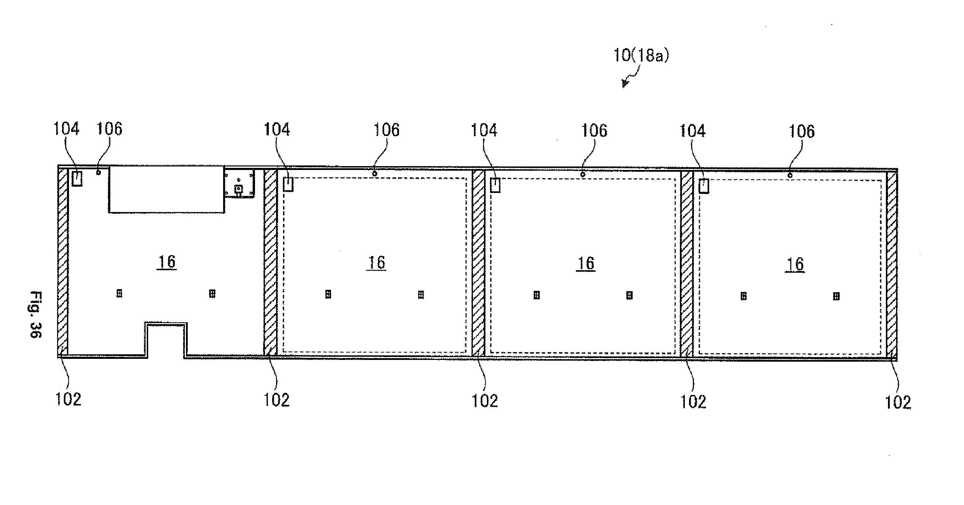

Further, as shown in FIG. 36, a heat transfer member 102 formed of aluminum or the like is provided at the bending portion connecting the planar portions 16 of the heat insulating mat 18a, thereby improving the heat transfer performance at four corners when the heater jacket 10 is contained inside the container 12. The heat transfer member 102 is thermally connected to the heater 14 of the heater jacket 10, and even when the conveying subject is solidified, the conveying subject may be melted at four corners due to the heat transferred from the heater jacket 10.

Further, a clamp member 104 may be provided near the heat transfer member 102 so as to fix the bag for accommodating the conveying subject. In this case, when a fixture is provided at the corresponding position of the bag so as to be connected to the clamp member 104 and the fixture is connected to each of the clamp members 104 at four corners, it is possible to easily perform a setting operation of setting the bag into the container 12 and make sure adhesiveness of the bag to the four corners.

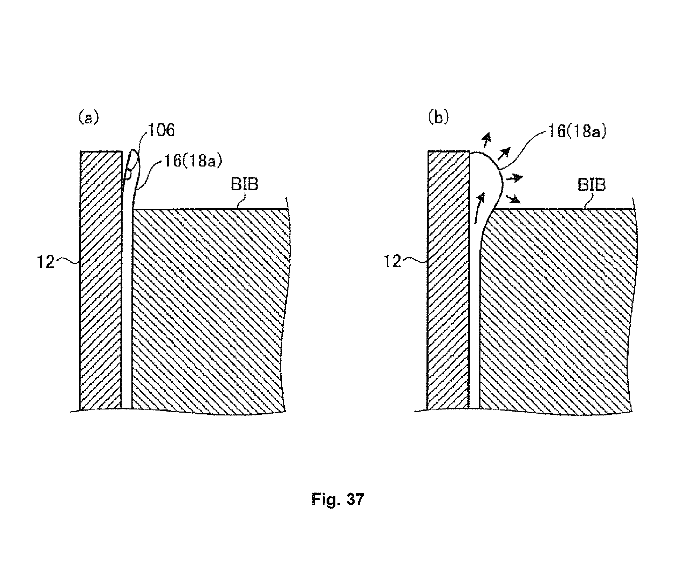

Further, as shown in FIG. 36, a small-diameter air releasing hole 106 may be provided at the upper center of each of the planar portions 16 of the heat insulating mat 18a. The air releasing hole 106 is configured to prohibit the permeation of liquid and discharge only air inside the heat insulating mat 18a. Here, if the air releasing hole 106 is not provided, as shown in FIG. 37(b), air may be accumulated and expanded at the upper portion inside the heat insulating mat 18a due to the pressure in the conveying subject BIB that is to be charged therein, which may cause concern in that the handling of the conveying subject BIB is disturbed. However, if the air releasing hole 106 is provided, as shown in FIG. 37(a), the air accumulated at the upper portion inside the heat insulating mat 18a may be released, thereby preventing the expanding deformation at the upper portion of the heat insulating mat 18a.

Next, the effect obtained in a method of conveying a highly viscous product such as chocolate or oil using the container device of the invention will be described. First, a sequence of the related art at the time of conveying the highly viscous product produced in a factory to a customer and taking out the highly viscous product by the customer will be described. In the case of chocolate, the chocolate melted at approximately 40°C in the factory is conveyed to the customer with a 10-torn or the like tank lorry equipped with a heating and warming device when the volume of the chocolate to be conveyed is large. In this case, the highly viscous product is discharged while the tank lorry is connected to the customer facility, and the customer may take the highly viscous product out in a melted state.

Incidentally, in recent years, a small volume of chocolate has been frequently conveyed due to the small-lot production of a wide variety of products. In this case, for example, the chocolate is packed and charged in a 20 L-cardboard box so as to be accommodated therein in a solidified state in a cold storage chamber of a temperature of about 20°C, approximately fifty 20 L-cardboard boxes are loaded and conveyed to the customer on a cooling truck, and the customer manually unpacks each pack of the 20-L cardboard boxes and inserts the chocolate into a heat-stirring device, whereby the chocolate is crushed and melted in the device.

In the case of the small-lot conveying type, since the produced melted chocolate is conveyed while being cooled and solidified and the chocolate is crushed and heated again to be melted, energy loss is very large, and wastes of the cardboard are not uselessly generated.

However, according to the container device of the invention, since it is possible to suppress a decrease in temperature of the conveying subject, approximately 1 ton of chocolate in a melted state may be conveyed using a general truck instead of a cooling truck sent from a production factory while the temperature is maintained in the temperature range of, for example, 40°C to 60°C and the melted state is maintained. For this reason, since the customer receiving the container device may discharge the melted chocolate therefrom, it is possible to remove energy loss of the related art. Further, since a general truck may be used, the conveying costs decrease. Furthermore, since the heater jacket embedded in the container device of the invention is lightweight, it is possible to decrease the weight of the container while ensuring the desired heating and warming performance.

On the other hand, in the case of oil, the oil may be largely classified into two types, fatty oil which is a liquid at a normal temperature and lard which is a solid at a normal temperature. The melting point of the fatty oil is in the temperature range of approximately 40°C to 50°C, and the fatty oil may be melted by using only the electric heating board installed at the bottom surface of the container for approximately 72 hours or less (an ambient temperature: approximately 20°C). However, fat such as lard is melted in a factory in the temperature range of approximately 50°C to 60°C depending on the type thereof, is charged in the inner bag of the container, and is ripened by being disposed in a ripening room having an ambient temperature of approximately 20°C for approximately one week until it is completely hardened.

Therefore, in the case where fat (hardened oil) such as lard is conveyed to a customer and the customer discharges the fat from the container, there is a need to keep performing the heating operation using the electric heating board of the bottom surface of the container for approximately one week or more so as to melt the fat, which leads to the loss of energy. However, according to the container device of the invention, since it is possible to highly efficiently heat and melt such hardened oil in a short time, the melted hardened oil may be conveyed using a general truck instead of a cooling truck while ensuring the melted state thereof from the production factory. For this reason, since the customer receiving the container device may discharge the hardened oil in a melted state, it is possible to prevent the loss of energy of the related art. Further, since a general truck may be used, the conveying costs decrease.

Further, since the product such as chocolate has a property in which the product is burned or oxidized at the temperature equal to or higher than 60°C, there is a need to be careful about the burning of the conveying subject even when the temperature of the conveying subject increases due to the over short-circuiting of the heater after the automatic temperature control device is turned off at the time of the initial heating. Here, according to the heater jacket and the container device of the invention, since it is possible to control the temperature of the conveying subject so that it becomes a desired temperature by controlling the temperature of the heater, it is possible to prevent an accident such as sticking in advance. In particular, when the heating panel of Patent Document 7 is used as the external heat transfer member (the electric heating board) of the container device of the invention, it is possible to prevent the burning and the sticking of the chocolate which is not liable to convection due to its high viscosity at the time of heating the chocolate at the first time.

Further, even when the conveying subject is solidified inside the container, the conveying subject may be melted and discharged to the outside. Furthermore, it is possible to decrease the amount of residual attached to the inner surface of the bag due to the surface tension or the like.

As described above, according to the invention, a heater jacket is provided which is attachable to and detachable from an inner surface of a container and has a heating and warming function for heating and keeping a conveying subject inside the container warm, the heater jacket including: a lightweight and flexible heat insulating mat that is formed by connecting at least one planar portion to each other in a bendable manner, the planar portion having a temperature-controllable heater embedded therein, thereby directly heating and warming the conveying subject from the planar portion by controlling the temperature of the heater depending on the purpose in use. Accordingly, it is possible to improve heating efficiency and save energy. Further, it is possible to easily and promptly attach and detach the heater jacket to and from the inner surface of the container by using the lightweight and flexible heat insulating mat formed by connecting the respective planar portions in a bendable manner.

### INDUSTRIAL APPLICABILITY

As described above, the heater jacket and the container device according to the invention are suitable for a conveying container such as an IBC that heats and keeps a highly viscous product (a conveying subject) such as chocolate or oil warm, and particularly, suitable for the case where a receiver wants to take the conveying subject out in a melted state.

### DESCRIPTION OF REFERENCE SIGNS

- 10:: HEATER JACKET
- 12:: CONTAINER BODY
- 14:: HEATER
- 16:: PLANAR PORTION
- 18:: HEATER JACKET BODY
- 18a:: HEAT INSULATING MAT
- 20:: UPPER COVER
- 21:: DOOR PORTION
- 22, 22a:: ELECTRIC HEATING BOARD (EXTERNAL HEAT TRANSFER MEMBER)
- 24, 52:: HEAT INSULATING MATERIAL
- 26:: INSULATING MATERIAL
- 28:: REINFORCEMENT MATERIAL (PLASTIC MEMBER)
- 30, 54:: EXTERIOR MATERIAL
- 34, 50:: ALUMINUM FOIL (METAL FOIL)
- 36, 36A, 36B, 36C, 36D:: HEATING SURFACE
- 37, 37A, 37B, 37C, 37D:: NON-HEATING SURFACE
- 38:: DOUBLE-SIDED TAPE
- 40:: AUTOMATIC TEMPERATURE CONTROL DEVICE (TEMPERATURE CONTROL UNIT)
- 42:: FUSE (CIRCUIT-BREAKING UNIT)
- 44:: INTERCONNECTION
- 46:: PLASTIC CARDBOARD
- 48:: PFA CORD HEATER
- 56:: HINGE PORTION
- 58:: LOWER HEAT INSULATING PORTION
- 60:: MAGIC TAPE
- 62:: CONNECTOR
- 64:: EXTERNAL POWER SUPPLY
- 66, 13:: POWER SUPPLY CORD
- 68:: RUBBER PLUG
- 70:: ELECTRICAL EQUIPMENT UNIT
- 72:: TEMPERATURE SENSOR
- 74:: ELECTRICAL EQUIPMENT CONTROL UNIT
- 76:: DISCHARGE PORT
- 78:: NOTCH
- 80:: HEAT TRANSFER MEMBER
- 80a:: CONTACT PORTION
- 82:: ABNORMAL TEMPERATURE DETECTING UNIT
- 82a:: ELECTRIC HEATING BOARD DETECTING PORTION
- 82b:: HEATER JACKET DETECTING PORTION
- 82c:: JOINT BOX PORTION
- 84:: GROUND
- 86:: ABNORMAL TEMPERATURE DETECTING AUTOMATIC TEMPERATURE CONTROL DEVICE
- 88:: AUTOMATIC TEMPERATURE CONTROL DEVICE
- 90:: FUSE
- 92:: HEATER
- 94:: LED
- 96:: DIODE
- 98:: RESISTOR
- 100:: CONTAINER DEVICE
- 102:: HEAT TRANSFER MEMBER
- 104:: CLAMP MEMBER
- 106:: AIR RELEASING HOLE

## Claims

1. A heater jacket that is attachable to and detachable from an inner surface of a container and has a heating and warming function for heating and keeping a conveying subject inside the container warm, the heater jacket comprising:
a lightweight and flexible heat insulating mat that is formed by connecting at least one planar portion to each other in a bendable manner, the planar portion having a temperature-controllable heater embedded therein.

2. The heater jacket according to claim 1,
wherein the heat insulating mat includes a plastic member and is rigid to the extent that it has an ability to stand by itself.

3. The heater jacket according to claim 1 or 2,
wherein the heater includes a temperature control unit and a circuit-breaking unit.

4. The heater jacket according to any one of claims 1 to 3,
wherein the heat insulating mat includes a plastic member, a metal foil is provided on the surface of the plastic member, and the heater provided on the surface of the plastic member is interposed by the metal foil.

5. The heater jacket according to any one of claims 1 to 4, further comprising:
an electrical equipment unit that includes a connector configured to supply electricity to an external electric heating member;
a temperature sensor that is provided inside the heat insulating mat and detects the initial temperature of the conveying subject; and
an electrical equipment control unit that calculates an optimal control time needed to realize an energy-saving operation based on the initial temperature of the conveying subject detected by the temperature sensor and controls the operation of the heater and the operation of the external electric heating member based on the calculated optimal control time.

6. The heater jacket according to claim 5,
wherein the electrical equipment control unit controls the operation of the heater and the operation of the external electric heating member so as to delay the timing of heating each heating surface of a heating surface formed at one surface of each planar portion of the heat insulating mat and a heating surface of the external electric heating member.

7. The heater jacket according to any one of claims 1 to 6,
wherein the heat insulating mat is provided with a door portion that does not include the heater and has the ability to be opened or closed.

8. The heater jacket according to anyone of claims 1 to 7,
wherein a color of an exterior material of a heating surface formed at one surface of the planar portion and a color of an exterior material of a non-heating surface formed at the other surface are set to be different from each other.

9. The heater jacket according to any one of claims 1 to 8, wherein the heater is formed of a fluorine resin.

10. The heater jacket according to any one of claims 1 to 9,
wherein the heat insulating mat includes a plastic member, a metal foil is provided on the surface of the plastic member, the heater provided on the surface of the plastic member is interposed by the metal foil, and the metal foil is affixed to the heater and the plastic member by a conductive adhesive.

11. The heater jacket according to any one of claims 1 to 10,
wherein an air releasing hole is provided at the upper portion of the heat insulating mat.

12. The heater jacket according to any one of claims 1 to 11,
wherein a heat transfer member is provided at the bending portion connecting the planar portions of the heat insulating mat.

13. The heater jacket according to claim 12,
wherein a clamp member is provided near the heat transfer member so as to fix a bag for accommodating the conveying subject.

14. The heater jacket according to any one of claims 1 to 13,
wherein an abnormal temperature detecting unit is provided so as to detect an abnormal temperature of the heat insulating mat.

15. A container device comprising:
the heater jacket according to any one of claims 1 to 14; and
an electric heating board that serves as the external heat transfer member,
wherein a conveying subject inside the container is heated and kept warm.

16. The container device according to claim 15,
wherein the container device is formed so as to be foldable, and wherein the heater jacket according to any one of claims 1 to 14 is folded and contained inside the container when the container device is folded.

17. The container device according to claim 15 or 16,
wherein the container device is formed so as to be foldable, and wherein the electric heating board is contained inside the container when the container device is folded.

18. The container device according to any one of claims 15 to 17,
wherein the heat insulating mat of the heater jacket according to any one of claims 1 to 14 is disposed on the four inside side surfaces and the top surface of the container, and the electric heating board is disposed on the bottom inside surface of the container, so that the conveying subject surrounded by the heat insulating mat and the electric heating board is heated and kept warm.

19. The container device according to claim 18,
wherein a discharge port is provided at the bottom surface of the container so as to discharge the conveying subject therefrom, and the electric heating board is provided with a notch for the discharge port.

20. The container device according to claim 19,
wherein a heat transfer member is provided at the notch of the electric heating board so as to be attachable thereto and detachable therefrom.

21. The container device according to any one of claims 15 to 20,
wherein an abnormal temperature detecting unit is provided so as to detect an abnormal temperature of the electric heating board.

22. The container device according to any one of claims 15 to 21,
wherein the electric heating board is packed by a bag member so as to prevent contaminants from adhering to the electric heating board.
